# EUROPEAN PATENT SPECIFICATION

(11) **EP 3 190 217 B1**
(45) Date of publication and mention of the grant of the patent: **20.01.2021**
(21) Application number: 15837939.6
(22) Date of filing: 28.08.2015
(51) Int. Cl.: D06F 37/40, D06F 23/02, D06F 23/06, D06F 37/06

(54) **DRUM-TYPE WASHING MACHINE**
TROMMELWASCHMASCHINE
MACHINE À LAVER DE TYPE À TAMBOUR

(30) Priority: 01.09.2014 JP 2014177580
(43) Date of publication of application: 12.07.2017
(73) Proprietor: Haier Asia Co., Ltd, Tokyo 100-0005 (JP); Qingdao Haier Washing Machine Co., Ltd., Qingdao, Shandong 266101 (CN)
(72) Inventor: TSUJI, Takahiro, Tokyo 100-0005 (JP)
(74) Representative: Pfenning, Meinig & Partner mbB
(86) International application number: PCT/CN2015/088442
(87) International publication number: WO 2016/034084

(56) References cited:
- EP-A1- 1 439 255
- EP-A1- 3 156 535
- CN-A- 1 204 710
- CN-A- 1 415 794
- CN-A- 1 415 794
- CN-A- 1 517 473
- JP-A- H10 314 489
- US-A- 5 887 458
- US-B1- 6 176 108

## Description

### TECHNICAL FIELD

The present disclosure relates to a drum-type washing machine, and more particularly to the drum-type washing machine which not only may continuously carry out from washing to drying but also may perform washing without drying.

### BACKGROUND

Conventionally, a drum-type washing machine washes laundries through making a horizontal axis type drum which is arranged within an outer tank stored water at its a bottom part to rotate, a lifting rib which is arranged in the drum to lifting the laundries and then dropping the laundries, thereby throwing the laundries onto an inner circumference surface of the drum.

In this way, in a configuration in which the laundries is agitated by the lifting rib, it is difficult to make the laundries intertwining with each other or rubbing against each other. For this reason, compared with a automatic washing machine in which the laundries are washed by the rotation of an agitator in a washing and dewatering tank, a mechanical force of the drum-type washing machine acting on the laundries is apt to be decreased, and the cleaning performance tends to be lowered.

Therefore, in the drum-type washing machine, in order to improve the cleaning performance, a configuration may be adopted, in which a rotating body having a protrusion on its surface is provided on a rear surface of the drum, the drum and the rotating body are rotated at different rotation speeds during washing and rinsing (see Patent Document Japanese Patent Application No. 2008-104684). An example of a drum-type washing machine which can carry out switching of a driving form of a driving part through a clutch mechanism part is disclosed in the application EP 3156535 A1, which represents prior art under Article 54(3) EPC.

EP 1439255 A1 describes a horizontal-type washing machine comprising rotation transmission means with a clutch device for transmitting a rotational force of an induction motor to the drum with a rotational speed decelerated from a rotational speed of the induction motor in a laundering operation, and with a rotational speed identical to the rotational speed of the induction motor in a dehydrating operation.

### SUMMARY

Problems to be solved by the present disclosure:

In a drum-type washing machine with the above-mentioned structure, it is necessary to rotate the drum and the rotating body integrally when dewatering. Therefore, a clutch mechanism is provided in a driving part for driving the drum and the rotating body and switches a driving mode of the driving part between a biaxial driving mode in which the drum and the rotating body are rotated respectively and a uniaxial driving mode in which the drum and the rotating body are rotated integrally.

For example, the clutch mechanism can operate by a structure including following parts: a clutch body moving between a first position for switching to the biaxial driving mode and a second position for switching to the uniaxial driving mode; a clutch lever for moving the clutch body; and a clutch driving apparatus for driving the clutch lever. The clutch driving apparatus is provided with a movable part such as a cam, etc. An action of the movable part is transmitted to the clutch lever, so that the clutch lever is activated.

However, during the manufacture of the drum-type washing machine, the clutch lever and the clutch driving apparatus may slightly deflect from their fixed positions. Therefore, the reliability of the switching action performed by means of the clutch mechanism can be improved, if a structure, in which the action of the movable part of the clutch driving apparatus can be well transmitted to the clutch lever even if such deflection of the fixed position occurs, is adopted.

The present disclosure has been made in view of the above problems, and an object of the present disclosure is to provide a drum-type washing machine which is capable of improving the reliability of a switching action performed by means of the clutch mechanism.

Solutions for solving the problems:

A drum-type washing machine according to a main aspect of the present disclosure includes an outer tank disposed in a housing, a drum disposed in the outer tank and capable of rotating around a horizontal axis or an inclination axis inclined with respect to the horizontal direction; a rotating body disposed at a rear portion of the drum and being provided with a protruding part in contact with the laundries at its surface, and a driving part for rotating the drum and the rotating body. Herein, the driving part includes a driving motor for driving the drum and the rotating body, a wing shaft, a drum shaft, a planetary gear mechanism, a bearing unit and a clutch mechanism for switching the driving mode of the driving part between a first driving mode and a second driving mode. The first driving mode refers to a driving mode in which the drum and the rotating body are rotated at different rotational speeds, respectively, and the second driving mode refers to a driving mode in which the drum and the rotating body are integrally rotated at a same speed. A cylindrical bearing part is provided in a central portion of the bearing unit, a fixing flange part is formed around the bearing part, a rack is formed at a rear end of the bearing part of the bearing unit. The clutch mechanism includes a clutch body, a clutch lever, a lever support part, a clutch driving apparatus, a relay rod. An annular rack is formed on an outer peripheral surface of an front end of the clutch body, the rack is formed to be engaged with the rack of the bearing unit, and an annular clamping type flange part is formed at an rear end of the clutch body. The includes an upper lever configured along an outer peripheral surface of a lower half part of the clutch body and a lower lever extending downward and forward from a lowermost portion of the upper lever, a pushing part for pushing the clutch body is formed at an upper end of the upper lever, a rotating shaft is fixed at an upper end of the lower lever, a right end and a left end of the rotating shaft pass through the clutch lever, a mounting shaft parallel to the rotating shaft is formed at a lower end of the lower lever, and the clutch lever is configured to rotate around the rotating shaft as a rotation center. The lever support part is fixed to a rear portion of a bearing part of the bearing unit. The clutch driving apparatus is disposed under the clutch lever, the clutch driving apparatus comprises a torque motor, a cam which rotates around a horizontal axis by means of a torque of the torque motor and a camshaft which is capable of moving with a rotation of the cam, and the camshaft is parallel to the mounting shaft, and the clutch driving apparatus is fixed to a fixing flange part of the bearing unit via a mounting plate, and the mounting plate is fixed to the flange part of the bearing unit. The relay member is located between the clutch lever and the clutch driving apparatus, with an upper endbeing rotatably mounted on the mounting shaft, and a lower end being rotatably mounted on the camshaft, and configured to push and pull the lower end of the lower clever of the clutch lever along with the movement of the camshaft.

According to the above-described structure, the other end of the clutch lever can be pushed and pulled by the relay member along with the movement of the camshaft, so that the clutch lever is rotated. For example, when the clutch body is pushed by the pushing part of the clutch lever to move to the first position, the driving mode of the driving part is switched to the first driving mode, and thus the drum and the rotating body rotate at different rotation speeds. When the pushing of the pushing pat to the clutch body is released, the clutch lever moves to the second position and the driving mode of the driving part is switched to the second driving mode, and thus the drum and the rotating body are integrally rotated at the same rotation speed.

Herein, one end of the relay member is rotatably mounted on the mounting shaft, and the other end thereof is rotatably mounted on the camshaft. Since the relay member can change its position by the rotations of both ends thereof, when the fixed positions of the clutch driving apparatus or the like deviate from a standard fixed position towards a direction in which the position of the relay member may be changed, the deviation can be absorbed by the relay member. Therefore, the action of the camshaft of the clutch driving apparatus can be transmitted to the clutch lever even if the fixed position of the clutch driving apparatus or the like is deviated, thereby improving the reliability of the switching action implemented by the clutch mechanism.

In the drum-type washing machine of the present embodiment, the clutch lever may adopt a structure in which the pushing part is in contact with the clutch body when the clutch body is in the first position. In this case, the relay member includes an elastic part that being capable of elongating in a direction in which the other end of the clutch lever is pushed and pulled.

According to the above-described structure, the elastic part of the relay member may elongate so that the clutch lever moves in a direction towards the second position, when the clutch body is at the first position, a force which pushes the clutch body toward the second position is accidentally generated and which is applied to the clutch lever via the clutch body. As a result, since the force withstand by the clutch lever is weak, deformation, breakage and the like of the clutch lever can be suppressed.

When the above-described structures are used, the elastic part may adopt a structure including a close-wound spring.

If such a structure is adopted, since the close-wound spring has an initial tension, the elastic part is not stretched when the clutch lever is normally pulled by the relay member. Therefore, it is possible to suppress a transmission loss occurred at the relay member, since the elastic part stretches such that the amount of movement on the clutch lever side is smaller than that on the clutch driving apparatus side.

### Effect of the disclosure

According to the present disclosure, there is provided a drum-type washing machine being capable of improving the reliability of the switching action performed by the clutch mechanism.

The effect and the significance of the present disclosure are further described by the following embodiments. However, the following embodiments are only examples of the implementation of the present disclosure, and the present disclosure is not limited to the contents described in the following embodiments.

### BRIEF DESCRIPTION OF THE DRAWINGS

Fig. 1 is a side cross-sectional view showing a structure of a drum-type washing machine according to an embodiment.
Fig. 2 is a cross-sectional view showing a structure of a driving part according to the embodiment.
Fig. 3 is a front view showing a structure of a rotor of a driving motor according to the embodiment.
Fig. 4 is an enlarged perspective view showing a rear portion of a bearing unit according to the embodiment.
Figs. 5(A) to 5(C) are views showing a structure of a clutch body according to the embodiment.
Figs. 6(A) and 6(B) are views showing a structure of a moving mechanism according to the embodiment.
Fig. 7(A) is a view showing an action of a clutch mechanism when being switched to a biaxial driving mode according to the embodiment, and Fig. 7(B) is a view showing an action of the clutch mechanism when switching to a uniaxial drive mode according to an embodiment.
Fig. 8(A) is a view showing actions of a drum and a rotating body in the biaxial driving mode according to the embodiment, and Fig. 8(B) is a view showing actions of the drum and the rotating body in the uniaxial driving mode according to the embodiment.
Fig. 9 is a view showing the action of the clutch lever in the condition that a large backward force is generated by a pushing part of the clutch lever in the biaxial drive mode according to an embodiment.
Figs. 10(A) and 10(B) are views showing a state of a clutch mechanism when the clutch driving apparatus is fixed at a fixed position which deviates forward, backward from a standard fixed position, respectively, according to an embodiment.

### DETAILED DESCRIPTION

Hereinafter, a drum-type washing machine without a drying function according to an embodiment of the present disclosure will be described with reference to accompanying drawings.

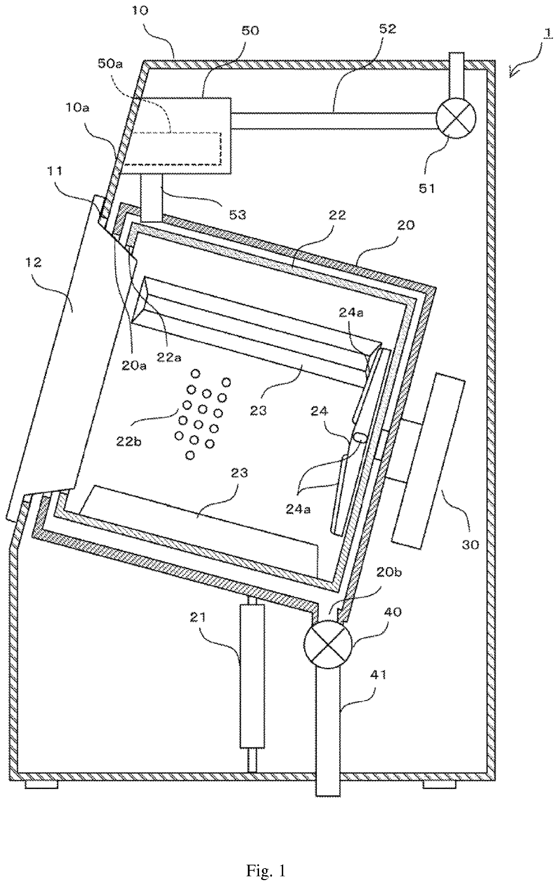

Fig. 1 is a side cross-sectional view showing a structure of a drum-type washing machine 1.

The drum-type washing machine 1 includes a housing 10 constituting the appearance. A front surface 10a of the housing 10 is inclined from a central portion to an upper portion, and an inlet 11 for laundries is formed on the inclined surface. The inlet 11 is covered by a door 12 opened and closed freely.

In the housing 10, an outer tank 20 is elastically supported by a plurality of shock absorbers 21. A drum 22 which is capable of rotating freely is disposed in the outer tank 20. The outer tank 20 and the drum 22 are inclined in such a way that rear surfaces thereof are lowered with respect to a horizontal direction. As a result, the drum 22 is rotated about an inclination axis inclined with respect to the horizontal direction. Inclination angles of the outer tank 20 and the drum 22 may be set to about 10 to 20 degrees. A opening part 20a of the front surface of the outer tank 20 and an opening part 22a of the front surface of the drum 22 are opposed to the inlet 11, and are closed by the door 12 together with the inlet 11. A plurality of dewatering holes 22b are formed on a peripheral wall of the drum 22. Further, three lifting ribs 23 spaced equally substantially are provided on an inner peripheral surface of the drum 22 in a circumferential direction.

A rotating body 24, which has a substantially disk shape, is rotatably disposed at a rear portion of the drum 22. A plurality of protruding parts 24 extending radially from the central portion are formed on a surface of the rotating body 24. The rotating body 24 rotates coaxially with the drum 22.

A driving part 30 for generating a torque for driving the drum 22 and the rotating body 24 is disposed at the back of the outer tank 20. The driving part 30 rotates the drum 22 and the rotating body 24 in a same direction at different rotation speeds during the washing and the rinsing processes. More specifically, the driving part 30 rotates the drum 22 at a rotation speed under the condition that the applied centrifugal force of the laundries in the drum 22 becomes smaller than the gravity thereof, and rotates the rotating body 24 at a faster rotation speed than the rotation speed of the drum 22. On the other hand, during the dewatering process, the driving part 30 integrally rotates the drum 22 and the rotating body 24 at a rotation speed under the condition that the applied centrifugal force of the laundries in the drum 22 is much larger than the gravity thereof. The detailed configuration of the driving part 30 will be described later.

A drain outlet portion 20b is formed at the bottom of the outer tank 20. A drain valve 40 is provided at the drain outlet portion 20b. The drain valve 40 is connected to a drain hose 41. When the drain valve 40 is opened, the water stored in the outer tank 20 is discharged outside the machine through the drain hose 41.

A detergent box 50 is disposed in a front upper part of and within the housing 10. A detergent container 50a for receiving a detergent is accommodated in the detergent box 50 and can be drawn out from the front of the detergent box 50. The detergent box 50 is connected to a feed water valve 51 disposed in a rear upper part of the housing via a feed water hose 52. Further, the detergent box 50 is connected to the upper part of the outer tank 20 via a water injection pipe 53. When the feed water valve 51 is opened, running water from a tap is supplied into the outer tank 20 through the feed water hose 52, the detergent box 50 and the water injection pipe 53. At this time, the detergent contained in a detergent container 50a is supplied into the outer tank 20 along with the water flow.

Next, the configuration of the driving part 30 will be described in detail.

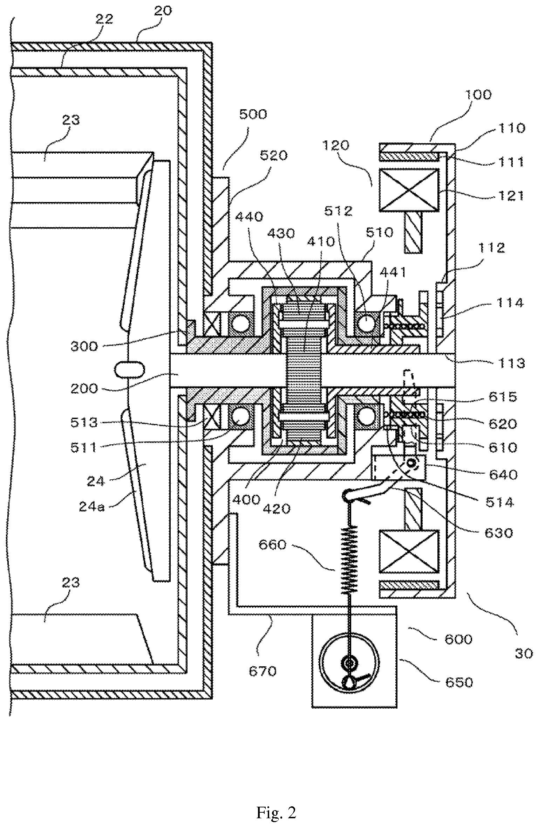

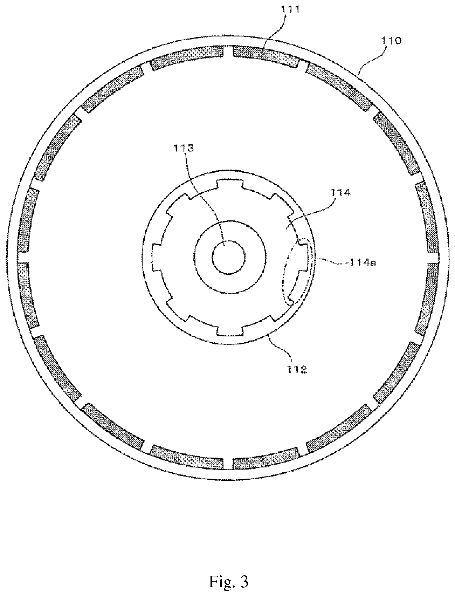

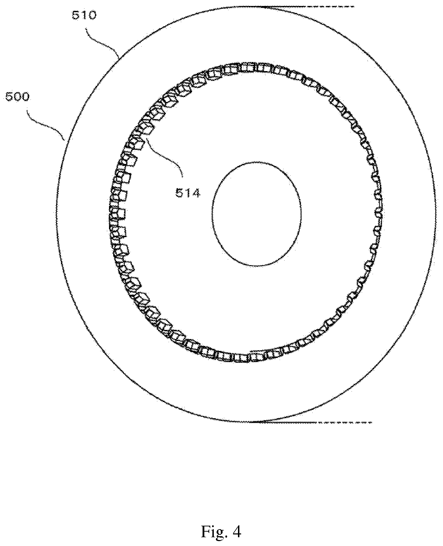

Fig. 2 is a cross-sectional view showing a structure of the driving part 30. Fig. 3 is a front view showing a structure of a rotor 110 of a driving motor 100. Fig. 4 is an enlarged perspective view of a rear portion of a bearing unit 500.

The driving part 30 includes the driving motor 100, a wing shaft 200, a drum shaft 300, a planetary gear mechanism 400, the bearing unit 500, and a clutch mechanism 600. The driving motor 100 generates torque for driving the drum 22 and the rotating body 24. The wing shaft 200 is rotated by the torque of the driving motor 100, and transmits the rotation to the rotating body 24. The planetary gear mechanism 400 decelerates the rotation of the wing shaft 200 (that is, the rotation of the rotor 110 of the driving motor 100) and transmits it to the drum shaft 300. The planetary gear mechanism 400 corresponds to a deceleration mechanism of the present disclosure. The drum shaft 300 rotates coaxially with the wing shaft 200 at a rotation speed that has been decelerated by the planetary gear mechanism 400, and transmits the rotation to the drum 22. The wing shaft 200 and the drum shaft 300 are rotatably supported by the bearing unit 500. The clutch mechanism 600 switches a driving mode of the driving part 30 between the biaxial driving mode and the uniaxial driving mode. The biaxial driving mode is a mode in which the rotating body 24 (wing shaft 200) is rotated at a rotation speed equalling to a rotation speed of the driving motor 100, and the drum 22 (drum shaft 300) is rotated at the rotation speed decelerated by the planetary gear mechanism 400. The uniaxial driving mode is a mode in which the rotating body 24 and the drum 22 (wing shaft 200), the drum shaft 300 and the planetary gear mechanism 400 are integrally rotated at a rotation speed equalling to the rotation speed of the driving motor 100.

The driving motor 100 is an outer rotor type DC brushless motor and includes a rotor 110 and a stator 120. The rotor 110 is formed to a cylindrical shape with a bottom, and permanent magnets 111 are arranged on an inner circumferential surface of the rotor 110 and throughout the entire circumference thereof. As shown in Fig. 3, a circular sleeve part 112 is formed in a center portion of the rotor 110. A sleeve hole 113 for fixing the wing shaft 200 is formed in the sleeve part 112, and an annular clamped concave part 114 is formed on an outer periphery of the sleeve hole 113. Concave-convex parts 114a are arranged on the outer peripheral portion of the clamped concave part 114 and throughout the entire circumference.

A coil 121 is provided at the outer peripheral portion of the stator 120. When driving current is supplied from a motor driving part (not shown) to the coil 121 of the stator 120, the rotor 110 rotates.

The drum shaft 300 has a hollow structure, and encloses the wing shaft 200 and the planetary gear mechanism 400. The central portion of the drum shaft 300 expands outward, and the expended portion is served as a housing portion of the planetary gear mechanism 400.

The planetary gear mechanism 400 includes a sun gear 410, an annular internal gear 420 enclosing the sun gear 410, multiple sets of planetary gears 430 interposed between the sun gear 410 and the internal gear 420, and a planetary gear carrier 440 by which the planetary gears 430 are rotatably held.

The sun gear 410 is fixed to the wing shaft 200,and the internal gear 420 is fixed to the drum shaft 300. A set of planetary gears 430 includes a first gear and a second gear engaged with each other and rotating in opposite directions. The planetary gear carrier 440 includes a planetary carrier shaft 441 extending backward. The planetary carrier shaft 441 is coaxial with the drum shaft 300, and configured to a hollow interior for inserting the wing shaft 200.

A rear end of the wing shaft 200 protrudes rearward from the planetary carrier shaft 441, and is fixed to the sleeve hole 113 of the rotor 110.

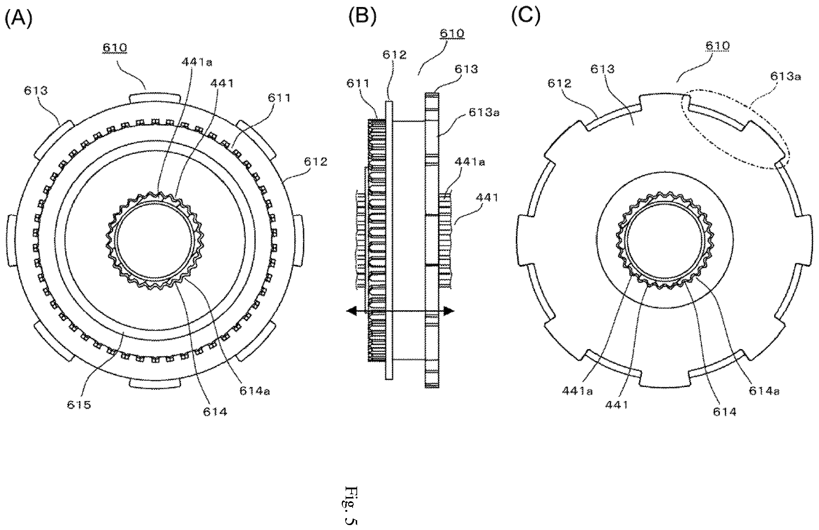

A cylindrical bearing part 510 is provided in a central portion of the bearing unit 500. Inside the bearing part 510, rolling bearings 511, 512 are provided at a front portion and a rear portion respectively, and a mechanical seal 513 is provided at a front end. The outer circumferential surface of the drum shaft 300 is supported by the rolling bearings 511 and 512, and rotates smoothly within the bearing part 510. Further, the mechanical seal 513 water is prevented from intruding between the bearing part 510 and the drum shaft 300. As shown in Fig. 5, a rack 514 is formed at a rear end of the bearing part 510 and throughout the entire circumference of an inner surface thereof.

In the bearing unit 500, a fixing flange part 520 is formed around the bearing part 510. The bearing unit 500 is fixed to the rear surface of the outer tank 20 via the fixing flange part 520 by means of a fixing method such as screw fastening. When the driving part 30 is mounted in the outer tank 20, the wing shaft 200 and the drum shaft 300 enter the inside of the outer tank 20. The drum 22 is fixed to the drum shaft 300, and the rotating body 24 is fixed to the wing shaft 200.

The clutch mechanism 600 includes a clutch body 610, a clutch spring 620, a clutch lever 630, a lever support part 640, a clutch driving apparatus 650 and a relay rod 660, which configured to a movement mechanism DM for moving the clutch body 610 in the front-rear direction.

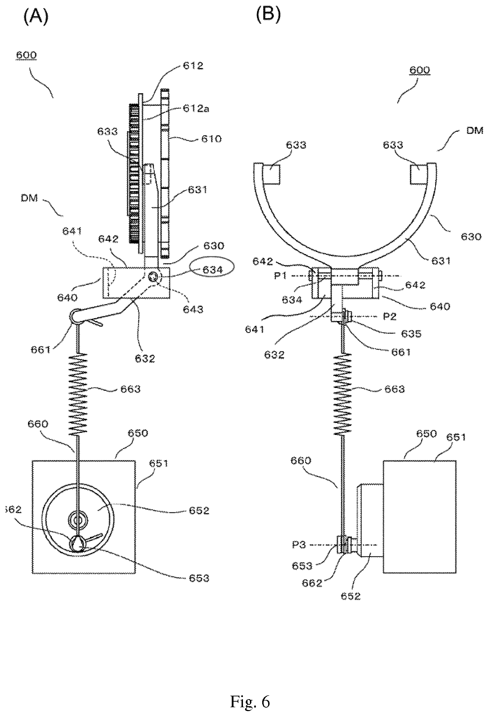

Figs. 5 and 6 are views showing a structure of the clutch mechanism 600. Figs. 5 (A) to 5(C) are views showing a structure of the clutch body 610, which are a front view, a right side view and a rear view of the clutch body 610, respectively. Figs. 6(A) and 6(B) are views showing a structure of the movement mechanism DM, which are a right side view and a rear view, respectively. In Fig. 5, the planetary carrier shaft 441 and the clutch body 610 are shown simultaneously and in Fig. 6(A), the clutch body 610 and the movement mechanism DM are shown simultaneously.

The clutch body 610 has a substantially disk shape. An annular rack 611 is formed on the outer peripheral surface of the front end of the clutch body 610. The rack 611 is formed to be engaged with the rack 514 of the bearing unit 500. Further, a flange part 612 is formed on the outer peripheral surface of the clutch body 610 and is at back of the rack 611. Furthermore, an annular clamping type flange part 613 is formed at the rear end of the clutch body 610. The clamping type flange part 613 has the same shape as that of the clamped concave part 114 of the rotor 110, and has a concave-convex part 613a throughout the entire circumference of its outer peripheral portion. When the clamping type flange part 613 is inserted into the clamped concave part 114, the concave-convex part 613a and concave-convex part 114a are clamped with each other.

The planetary carrier shaft 441 is inserted into a shaft hole 614 of the clutch body 610. A rack 614a formed on an inner peripheral surface of the shaft hole 614 is engaged with a rack 441a formed on the outer peripheral surface of the planetary carrier shaft 441. As a result, a front-rear movement of the clutch body 610 with respect to the planetary carrier shaft 441 is allowed, and a rotation in a circumferential direction thereof is restricted.

In the clutch body 610, an annular accommodation groove 615 is formed outside the shaft hole 614, and the clutch spring 620 is accommodated in the accommodation groove 615. As shown in Fig. 2, one end of the clutch spring 620 is in contact with the rear end of the bearing part 510, and the other end is in contact with a bottom surface of the accommodation groove 615.

The clutch lever 630 includes a substantially semicircular upper lever 631 along an outer peripheral surface of a lower half part of the clutch body 610 and a lower lever 632 extending downward and forward from the lowermost portion of the upper lever 631. At the left and right upper ends of the upper lever 631, there is formed a pushing part 633 which is in contact with a rear surface 612a of the flange part 612 of the clutch body 610 and pushes the flange part 612 forward.

A rotating shaft 634 is fixed at an upper end of the lower lever 632 of the clutch lever 630. A right end and a left end of the rotating shaft 634 pass through the clutch lever 630 and protrude outside the clutch lever 630 toward left and right, respectively. A mounting shaft 635 extending in the left-right direction is formed at a lower end of the lower lever 632. As shown in Fig. 6(B), an axis P2 of the mounting shaft 635 is parallel to a axis P1 of the rotating shaft 634.

The clutch lever 630 is rotatably supported by the lever support part 640. The lever support part 640 includes a bottom plate 641 and plate shaped arms 642 rising from both ends of the bottom plate 641. Rotating shaft holes 643 are formed in the plate shaped arms 642. The rotating shaft 634 of the clutch lever 630 passes through the rotating shaft holes 643.

The clutch driving apparatus 650 is disposed under the clutch lever 630. The clutch driving apparatus 650 includes a torque motor 651 and a disk-shaped cam 652 which rotates around a horizontal axis by means of the torque of the torque motor 651. The camshaft 653 is provided on an outer peripheral portion of an upper surface of the cam 652. When the camshaft 653 is located at the lowermost position, a rotation center of the cam 652 and a center of the mounting shaft 635 of the lower lever 632 are aligned in the front-rear direction. As shown in Fig. 6(B), the axis P3 of the camshaft 653 is parallel to the axis P2 of the mounting shaft 635.

The relay rod 660 extends in the up-down direction and connects the clutch lever 630 with the cam 652. The relay rod 660 corresponds to the relay member of the present disclosure. An upper end 661 of the relay rod 660 is rotatably mounted to the mounting shaft 635 of the lower lever 632, a lower end 662 is rotatably mounted to the camshaft 653 of the cam 652. A spring 663 is integrally formed at an intermediate position of the relay rod 660. The spring 663 is a retractable spring, which corresponds to the elastic part of the present disclosure.

As shown in Fig. 2, the lever support part 640 is fixed to the rear portion of the bearing part 510 of the bearing unit 500 by a fixing method such as screw fastening. Further, the clutch driving apparatus 650 is fixed to the fixing flange part 520 of the bearing unit 500 via a mounting plate 670.

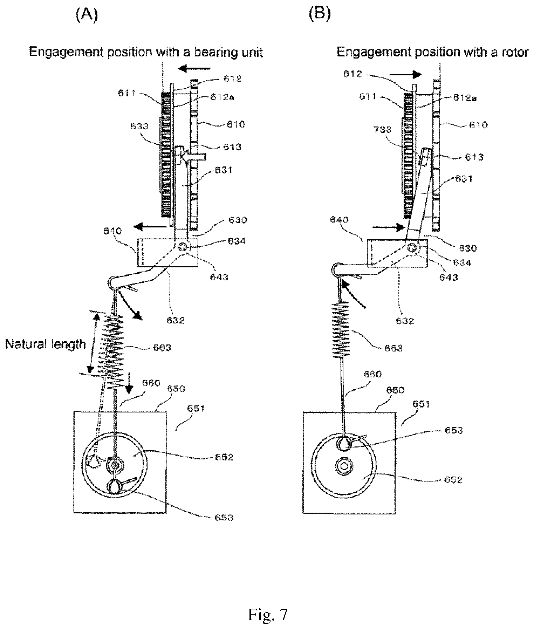

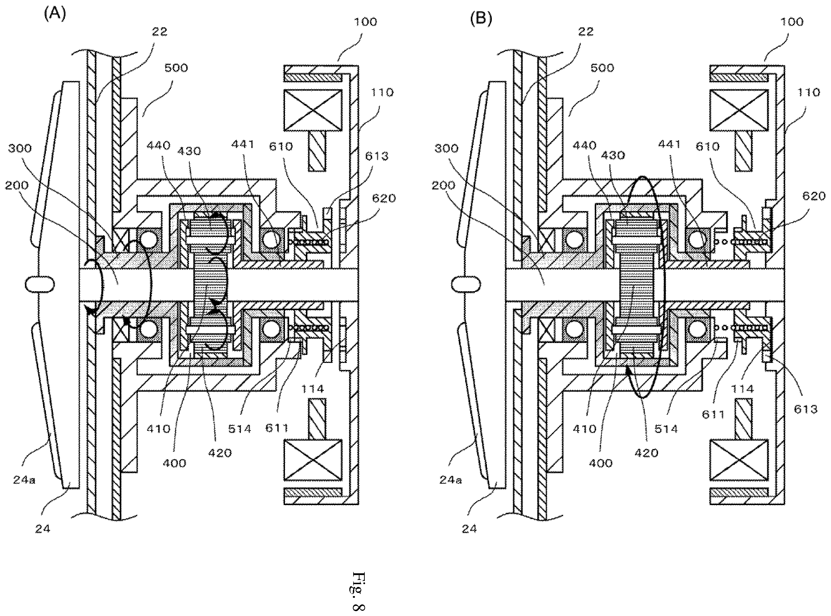

Fig. 7(A) is a view showing the action of the clutch mechanism 600 when switching to the biaxial driving mode. Fig. 7(B) is a view showing the action of the clutch mechanism 600 when switching to the uniaxial drive mode. Fig. 8(A) is a view showing actions of the drum 22 and the rotating body 24 in the biaxial driving mode. Fig. 8(B) is a view showing actions of the drum 22 and the rotating body 24 in the uniaxial driving mode.

In the case where the driving mode of the driving part 30 is switched from the uniaxial driving mode to the biaxial driving mode, as shown in Fig. 7(A), the cam 652 is rotated by means of the torque motor 651 so as to cause the camshaft 653 to be at the lowermost position. As the cam 652 rotates, the lower end of the lower lever 632 is pulled downward by the relay rod 660. The clutch lever 630 rotates forward around the rotating shaft 634, so that the upper lever 631 moves forward. The pushing part 633 of the upper lever 631 pushes the flange part 612 of the clutch body 610 forward. As shown in Fig. 8(A), the clutch body 610 moves forward against the elastic force of the clutch spring 620, and thus the rack 611 of the clutch body 610 is engaged with the rack 514 of the bearing unit 500.

In the present embodiment, as shown by dotted lines in Fig. 7(A), when the camshaft 653 moves to a predetermined intermediate position, the rack 611 of the clutch body 610 reaches a position at which the rack 611 of the clutch body 610 is engaged with the rack 611 of the bearing unit 500. At this moment, the spring 663 of the relay rod 660 is in a state of natural length. Since the clutch body 610 does not move to a more forward position than this engagement position, the spring 663 is stretched to a lower position as shown in Fig. 7(A), when the camshaft 653 moves from the predetermined position to the lowermost position. In this case, since the clutch lever 630 is pulled by the spring 663 and hence rotates forward, as shown by a hollow arrow in Fig. 7(A), a pushing force from the pushing part 633 is applied to the clutch body 610 at the engagement position. As a result, the rack 611 of the clutch body 610 can be firmly engaged with the rock 514 of the bearing unit 500.

As shown in Fig. 8(A), when the rack 611 and the rack 514 are engaged with each other, since the rotation of the clutch body 610 in the circumferential direction with respect to the bearing unit 500 is restricted, so the clutch body 610 is unable to rotate, such that the planetary carrier shaft 441 of the planetary gear mechanism 400 (that is, the planetary gear carrier 400) is fixed to a state that cannot be rotated. In such a state, when the rotor 110 rotates, the wing shaft 200 rotates at a rotation speed equaling to the rotation speed of the rotor 110, and the rotating body 24 connected to the wing shaft 200 also rotates at the rotation speed equaling to the rotation speed of the rotor 110. Due to the planetary gear mechanism 400, along with the rotation of the wing shaft 200, the sun gear 410 also rotates. As described above, since the planetary gear carrier 440 is in a fixed state, the first gear and the second gear of the planetary gear 430 rotate in the opposite direction and in the same direction with respect to the sun gear 410, respectively, and the internal gear 420 and the sun gear 410 rotate in the same rotation direction. As a result, the drum shaft 300 fixed to the internal gear 420 rotates at a slower rotation speed than that of the wing shaft 200 in the same direction as the rotation direction of the wing shaft 200, and the drum 22 fixed to the drum shaft 300 rotates at a slower rotation speed than that the rotating body 24 in the same direction as the rotation direction of the rotating body 24. In other words, the rotating body 24 rotates at a higher rotation speed than that of the drum 22 in the same direction as the rotation direction of the drum 22.

On the other hand, when the driving mode of the driving part 30 is switched from the biaxial driving mode to the uniaxial driving mode, as shown in Fig. 7(B), the cam 652 is rotated by means of the torque motor 651 so as to cause the camshaft 653 to be at the uppermost position. When the cam 652 rotates and the camshaft 653 moves upward, the spring 663 firstly is compressed. When the spring 663 returns to the natural length, the relay rod 660 moves upward along with the movement of the camshaft 653, and the lower end of the lower lever 632 is pushed by the relay rod 660 to move upward. The clutch lever 630 rotates rearward around the rotating shaft 634, and the upper lever 631 moves rearward. The pushing part 633 of the upper lever 631 departs from the flange part 612 of the clutch body 610. As shown in Fig. 8(B), the clutch body 610 moves rearward by means of the elastic force of the clutch spring 620, and the clamping type flange part 613 is engaged with the clamped concave part 114 of the rotor 110.

As shown in Fig. 8(B), when the clamping type flange part 613 and the clamped concave part 114 are engaged with each other, the rotation of the clutch body 610 in the circumferential direction with respect to the rotor 110 is restricted, so the clutch body 610 can rotate with the rotor 110. In such a state, when the rotor 110 rotates, the wing shaft 200 and the clutch body 610 rotate at a rotation speed equaling to the one of the rotor 110. At this time, due to the planetary gear mechanism 400, the sun gear 410 and the planetary carrier 440 rotate at the same rotation speed as that of the rotor 110. As a result, the internal gear 420 rotates at the same rotation speed as those of the sun gear 410 and the planetary gear carrier 440, and the drum shaft 300 fixed to the internal gear 420 rotates at the same rotation speed as that of the rotor 110. That is, in the driving part 30, the wing shaft 200, the planetary gear mechanism 400 and the drum shaft 300 rotate integrally. Therefore, the drum 22 and the rotating body 24 rotate integrally.

The drum-type washing machine 1 performs a washing operation of various modes. In the washing operation, a washing process, an intermediate dewatering process, a rinsing process and a final dewatering process are sequentially performed. It should be noted that the intermediate dewatering process and the rinsing process may be performed twice or more depending on the operation mode.

During the washing process and the rinsing process, the driving mode of the driving part 30 is switched to the biaxial driving mode. In order to make the laundries in the drum 22 to be immersed in the water stored in the outer tank 20, in which amount of the stored water should be at a predetermined water level that does not reach the lower edge of the inlet 11. In this state, the driving motor 100 rotates right and left alternately. Therefore, the drum 22 and the rotating body 24 rotate right and left alternately in a state in which the rotation speed of the rotating body 24 is larger than that of the drum 22. At this time, the drum 22 rotates at a rotation speed at which the centrifugal force acting on the laundries is smaller than the gravity. The laundries in the drum 22 are lifted up by the lifting ribs 23 and then dropped down, and are thrown onto the inner peripheral surface of the drum 22. In addition, the laundries are brought into contact with the protruding part 24a of the rotating body 24 at the rear portion of the drum 22, and rubbed and agitated by the protruding part 24a. As a result, the laundries are washed or rinsed.

In this way, during washing and rinsing, not only the mechanical force generated through the rotation of the drum 22 but also the mechanical force generated by the rotating body 24 are applied to the laundries, so it is expected that the cleaning performance may be improved. During the intermediate dewatering process and the final dewatering process, the driving mode of the driving part is switched to the uniaxial driving mode. The driving motor 100, the drum 22 and the rotating body 24 integrally rotate at a rotation speed at which the centrifugal force acting on the laundries within the drum 22 becomes much larger than the gravity. The laundries are pressed on the inner peripheral surface of the drum 22 by means of the centrifugal force so as to be dewatered.

In this way, during dewatering, the drum 22 and the rotating body 24 integrally rotate, so that the laundries closing against the drum 22 are well dewatered without being agitated by the rotating body 24.

Further, in the clutch mechanism 600, the clutch body 610 cooperates with the wing shaft 200 and the drum 300. Therefore, in the biaxial driving mode, a force of an unexpected magnitude is momentarily applied to the clutch body 610 backward (that is, in a direction of releasing the engagement), when the rack 611 of the clutch body 610 and the rack 514 of the bearing unit 500 are at an engagement state. For example, it is may occur that the laundries may strike the rotating body 24 from the front, and thus the striking force may be transmitted to the clutch body 610 via the wing shaft 200. Also, a backward force of an unexpected magnitude may be transmitted to the clutch body 610 since the rotation of the drum 22 is hindered. That is, a large force which causes the clutch body 610 connected to the planetary gear carrier 440 to rotate may be generated along with the rotation of the wing shaft 200, when the rotation of the drum 22 is hindered due to the movement of the laundries within the drum 22 or the like and thus the drum shaft 300 becomes difficult to rotate. Tapers are formed in the racks 611, 514 in the front-rear direction, so that the rack 611 of the clutch body 610 can be easily engaged with the rack 514 of the bearing unit 500 from the rear side. Therefore, when a large rotational force is generated on the clutch body 610, the large rotational force is converted into a large force toward the rear and applied to the clutch body 610 by means of the taper-shaped racks 611 and 514.

In the biaxial driving mode, when the force of an unexpected magnitude is applied to the clutch body 610, the pushing part 633 of the clutch lever 630 that is in contact with the clutch body 610 sustains this large force via the clutch body 610.

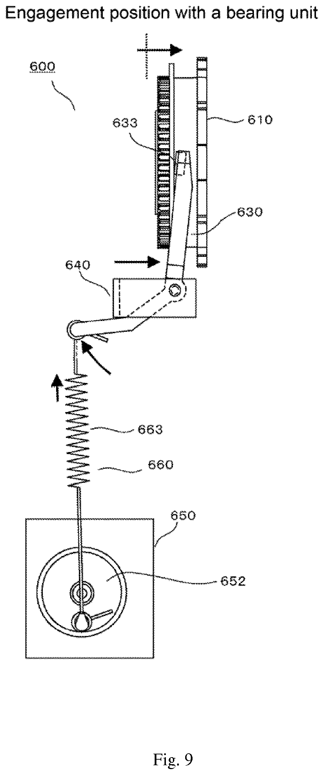

Fig. 9 is a view showing the action of the clutch lever 630 in the condition that a large rearward force is generated by a pushing part 633 of the clutch lever 630 in the biaxial drive mode. It should be stated that, the illustration of the clutch spring 620 is omitted in Fig. 9.

As described above, the relay rod 660 is formed with a spring 663. When a large rearward force is temporarily applied to the pushing part 633 of the clutch lever 630, as shown in Fig. 9, the spring 663 of the relay rod 660 extends upward, and the clutch lever 630 rotates rearward. As a result, the force applied to the clutch lever 630 is weakened. Therefore, it is possible to prevent the clutch lever 630 from being deformed, broken, or the like. In addition, the cam 652 of the clutch driving apparatus 650 is connected to the clutch lever 630 via the relay rod 660, it is also possible to prevent a large force from being applied to the cam 652. Therefore, damage to the clutch driving apparatus 650 and the like can also be prevented.

It is to be noted that the spring 663 adopts a structure that the spring does not exceed the permissible stretching amount even if the spring is further stretched from the stretched state in the biaxial driving mode due to an unexpected force. Thereby, the spring 663 will not be deformed, broken, or the like.

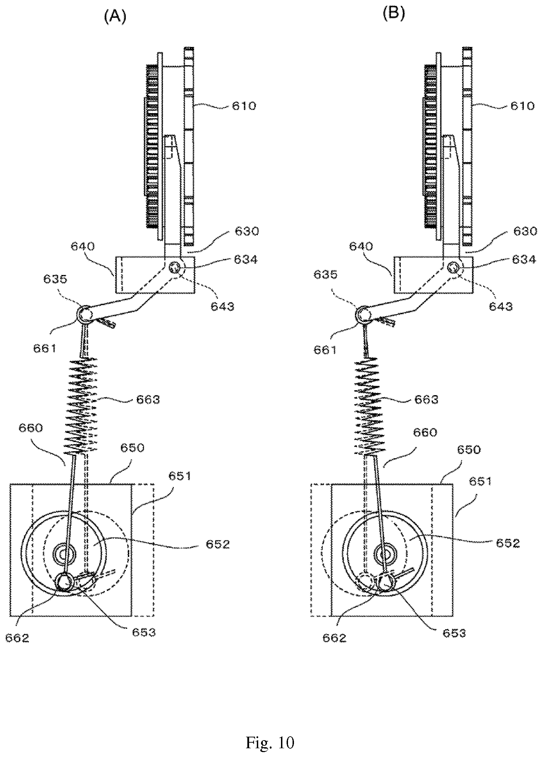

Fig. 10 are views showing the state of the clutch mechanism 600 when the clutch driving apparatus 650 is fixed at a fixed position which deviates forward, backward from a standard fixed position, respectively.

In the present embodiment, as described above, the upper end 661 of the relay rod 660 is rotatablely mounted to the mounting shaft 635 of the lower lever 632, and the lower end 662 is rotatablely mounted to the camshaft 653 of the cam 652. Therefore, as shown in Figs. 10(A) and 10(B), when the clutch driving apparatus 650 is fixed to a position that slightly forward or rearward deviates from the standard fixed position indicated by the broken line, the deviation of the fixed position can be absorbed by changing the position of the relay rod 660 with respect to the standard fixed position, thereby maintaining the connection of the clutch lever 630 and the clutch driving apparatus 650. Therefore, even if the fixing position of the clutch driving apparatus 650 is slightly forward or rearward shifted, the action of the camshaft 653 of the clutch driving apparatus 650 can be well transmitted to the cultch lever 630, therefore, the clutch body 610 can be moved as usually to make the driving mode thereof to be switched. Therefore, the reliability of the switching action performed by the clutch mechanism 600 can be enhanced.

Although embodiments of the present disclosure have been described above, the present disclosure is not limited to the above-described embodiments at all. In addition, the various modifications of the embodiments of the present disclosure may also be made.

For example, the spring 663 formed on the relay rod 660 may be a close-wound spring. The close-wound spring has the initial tension, as a result, the spring 663 cannot be stretched when the clutch lever 630 is pulled generally by the relay rod 660, and thus it is possible to suppress the condition that the amount of movement on side of the clutch lever 630 is smaller than that of the side of clutch driving apparatus 650, and that a transmission loss is occurred at the relay rod 660 due to the stretching of the spring 663.

Further, in the above embodiments, the rotating shaft 634 is fixed to the clutch lever 630, and the rotating shaft hole 643 is formed in the lever support part 640. However, a structure in which the rotating shaft 634 is fixed to the lever support part 640 and the rotating shaft hole 643 is formed in the clutch lever 630 may be adopted.

Further, in the above embodiments, the drum 22 is rotated around the inclination axis inclined with respect to the horizontal direction. However, the drum-type washing machine 1 may also adopt a structure in which the drum 22 is rotated around a horizontal axis.

Further, although the drum-type washing machine 1 of the above embodiments does not have a drying function, the present disclosure may be also applied to a drum-type washing machine with a drying function, that is, a drum-type drying washing machine.

In addition, a variety of modifications of the embodiments of the present disclosure can be made as needed within the scope of the technical concept disclosed in the claims.

### List of reference numbers:

10:housing; 20:outer tank; 22:drum; 24:rotating body; 24a:protruding part; 30:driving part; 600:clutch mechanism; 610:clutch body; 620:clutch spring; 630:clutch lever; 633:pushing part; 634:rotating shaft; 635:mounting shaft; 650:clutch driving apparatus; 653:camshaft; 660:relay rod (relay member); 661: upper end; 662: lower end; 663: spring (elastic part); 652:cam.

## Claims

1. A drum-type washing machine, comprising:
an outer tank (20) disposed in a housing (10);
a drum (22) disposed in the outer tank (20) and capable of rotating about a horizontal axis or an inclination axis inclined with respect to a horizontal direction;
a rotating body (24) disposed at a rear portion of the drum (22), and a surface of the rotating body (24) being provided with a protruding part (24a) for contacting washings; and
a driving part (30) for rotating the drum (22) and the rotating body (24),
wherein the driving part (30) comprises a driving motor (100) for driving the drum (22) and the rotating body (24), a wing shaft (200), a drum shaft (300), a planetary gear mechanism (400), a bearing unit (500) and a clutch mechanism (600), wherein a cylindrical bearing part (510) is provided in a central portion of the bearing unit (500), a fixing flange part (520) is formed around the bearing part (510), a rack (514) is formed at a rear end of the bearing part (510) of the bearing unit (500);
the clutch mechanism (600) comprises:
a clutch body (610), wherein an annular rack (611) is formed on an outer peripheral surface of an front end of the clutch body (610), the rack (611) is formed to be engaged with the rack (514) of the bearing unit (500), wherein an annular clamping type flange part (613) is formed at an rear end of the clutch body (610);
a clutch lever (630), wherein the clutch lever (630) comprises an upper lever (631) configured along an outer peripheral surface of a lower half part of the clutch body (610) and a lower lever (632) extending downward and forward from a lowermost portion of the upper lever (631), a pushing part (633) for pushing the clutch body (610) is formed at an upper end of the upper lever (631), a rotating shaft (634) is fixed at an upper end of the lower lever (632), a right end and a left end of the rotating shaft (634) pass through the clutch lever (630), a mounting shaft (635) parallel to the rotating shaft (634) is formed at a lower end of the lower lever (632), and the clutch lever (630) is configured to rotate around the rotating shaft (634) as a rotation center;
a lever support part (640), wherein the lever support part (640) is fixed to a rear portion of a bearing part (510) of the bearing unit (500);
a clutch driving apparatus (650) disposed under the clutch lever (630), wherein the clutch driving apparatus (650) comprises a torque motor (651), a cam (652) which rotates around a horizontal axis by means of a torque of the torque motor (651) and a camshaft (653) which is capable of moving with a rotation of the cam (652), wherein the camshaft (653) is parallel to the mounting shaft (635), and the clutch driving apparatus (650) is fixed to a fixing flange part (520) of the bearing unit (500) via a mounting plate (670), and the mounting plate (670) is fixed to the flange part (520) of the bearing unit (500); and
a relay rod (660) located between the clutch lever (630) and the clutch driving apparatus (650), with an upper end (661) being rotatably mounted on the mounting shaft (635), and a lower end (662) being rotatably mounted on the camshaft (653), and configured to push and pull the lower end of the lower lever (632) of the clutch lever (630) along with the movement of the camshaft (653);
when a driving mode is switched from a uniaxial driving mode to a biaxial driving mode, the cam (652) is rotated by means of the torque motor (651) so as to cause the camshaft (653) to be at the lowermost position, and the rack (611) of the clutch body (610) is firmly engaged with the rack (514) of the bearing unit (500);
when the driving mode is switched from the biaxial driving mode to the uniaxial driving mode, the cam (652) is rotated by means of the torque motor (651) so as to cause the camshaft (653) to be at an uppermost position, the clamping type flange part (613) is engaged with a clamped concave part (114) of a rotor (110) of the driving motor (100).

2. The drum-type washing machine according to claim 1, wherein
the clutch lever (630) maintains a state in which the pushing part (633) of the upper lever (631) is in contact with the clutch body (610) and pushes the flange part (612) of the clutch body (610) forward when the driving mode is switched to the biaxial driving mode, and
the relay member includes a spring (663) capable of elongating in a direction in which the lower end of the lower lever (632) of the clutch lever (630) is pushed and pulled.

3. The drum-type washing machine according to claim 2, wherein the spring (663) includes a close-wound spring.

## Patentansprüche

1. Waschmaschine vom Trommeltyp, umfassend:
einen äußeren Behälter (20), der in einem Gehäuse (10) angeordnet ist;
eine Trommel (22), die in dem äußeren Behälter (20) angeordnet ist und in der Lage ist, um eine horizontale Achse oder eine Neigungsachse, die in Bezug auf eine horizontale Richtung geneigt ist, zu drehen;
einen drehbaren Körper (24), der an einem hinteren Abschnitt der Trommel (22) angeordnet ist, und eine Oberfläche des drehbaren Körpers (24) mit einem vorstehenden Teil (24a) zum Kontaktieren von Wäsche versehen ist; und
einen Antriebsteil (30) zum Drehen der Trommel (22) und des drehbaren Körpers (24),
wobei der Antriebsteil (30) einen Antriebsmotor (100) zum Antreiben der Trommel (22) und des drehbaren Körpers (24), eine Flügelwelle (200), eine Trommelwelle (300), einen Planetengetriebemechanismus (400), eine Lagereinheit (500) und einen Kupplungsmechanismus (600) umfasst, wobei ein zylindrischer Lagerteil (510) in einem zentralen Abschnitt der Lagereinheit (500) vorgesehen ist, ein Befestigungsflanschteil (520) um den Lagerteil (510) herum ausgebildet ist, eine Zahnstange (514) an einem hinteren Ende des Lagerteils (510) der Lagereinheit (500) ausgebildet ist;
wobei der Kupplungsmechanismus (600) umfasst:
einen Kupplungskörper (610), wobei eine ringförmige Zahnstange (611) an einer äußeren peripheren Oberfläche eines vorderen Endes des Kupplungskörpers (610) ausgebildet ist, wobei die Zahnstange (611) ausgebildet ist, mit der Zahnstange (514) der Lagereinheit (500) in Eingriff zu sein, wobei ein ringförmiger Flanschteil vom Klemmtyp (613) an einem hinteren Ende des Kupplungskörpers (610) ausgebildet ist;
einen Kupplungshebel (630), wobei der Kupplungshebel (630) einen oberen Hebel (631), der entlang einer äußeren peripheren Oberfläche eines unteren Halbteils des Kupplungskörpers (610) ausgebildet ist, und einen unteren Hebel (632), sich erstreckend von einem untersten Abschnitt des oberen Hebels (631) nach unten und nach vorne, umfasst, ein Schubteil (633) zum Schieben des Kupplungskörpers (610) an einem oberen Ende des oberen Hebels (631) ausgebildet ist, eine Drehwelle (634) an einem oberen Ende des unteren Hebels (632) befestigt ist, ein rechtes Ende und ein linkes Ende der Drehwelle (634) durch den Kupplungshebel (630) hindurchgehen, eine Montagewelle (635), die zu der Drehwelle (634) parallel ist, an einem unteren Ende des unteren Hebels (632) ausgebildet ist und der Kupplungshebel (630) eingerichtet ist, sich um die Drehwelle (634) als ein Drehzentrum zu drehen;
einen Hebelstützteil (640), wobei der Hebelstützteil (640) an einem hinteren Abschnitt eines Lagerteils (510) der Lagereinheit (500) befestigt ist;
eine Kupplungsantriebsvorrichtung (650), die unter dem Kupplungshebel (630) angeordnet ist, wobei die Kupplungsantriebsvorrichtung (650) einen Drehmomentmotor (651) umfasst, einen Nocken (652), der sich mittels eines Drehmoments des Drehmomentmotors (651) um eine horizontale Achse dreht, und eine Nockenwelle (653), die in der Lage ist, sich mit einer Drehung des Nockens (652) zu bewegen, wobei die Nockenwelle (653) parallel zu der Montagewelle (635) ist und die Kupplungsantriebsvorrichtung (650) an einem Befestigungsflanschteil (520) der Lagereinheit (500) über eine Montageplatte (670) befestigt ist und die Montageplatte (670) an dem Flanschteil (520) der Lagereinheit (500) befestigt ist; und
einen Relaisstab (660), der zwischen dem Kupplungshebel (630) und der Kupplungsantriebsvorrichtung (650) angeordnet ist, mit einem oberen Ende (661), das drehbar auf der Montagewelle (635) montiert ist, und einem unteren Ende (662), das drehbar auf der Nockenwelle (653) montiert ist, und eingerichtet ist, das untere Ende des unteren Hebels (632) des Kupplungshebels (630) zusammen mit der Bewegung der Nockenwelle (653) zu schieben und zu ziehen;
wenn ein Antriebsmodus von einem uniaxialen Antriebsmodus auf einen biaxialen Antriebsmodus geschaltet wird, der Nocken (652) mittels des Drehmomentmotors (651) gedreht wird, um zu bewirken, dass die Nockenwelle (653) in der untersten Position ist, und die Zahnstange (611) des Kupplungskörpers (610) mit der Zahnstange (514) der Lagereinheit (500) fest in Eingriff ist;
wenn der Antriebsmodus von dem biaxialen Antriebsmodus auf den uniaxialen Antriebsmodus geschaltet wird, der Nocken (652) mittels des Drehmomentmotors (651) gedreht wird, um zu bewirken, dass die Nockenwelle (653) in einer obersten Position ist, wobei der Flanschteil vom Klemmtyp (613) mit einem geklemmten konkaven Teil (114) eines Rotors (110) des Antriebsmotors (100) in Eingriff ist.

2. Waschmaschine vom Trommeltyp nach Anspruch 1, wobei
der Kupplungshebel (630) einen Zustand beibehält, in dem der Schubteil (633) des oberen Hebels (631) in Kontakt ist mit dem Kupplungskörper (610) und den Flanschteil (612) des Kupplungskörpers (610) nach vorne schiebt, wenn der Antriebsmodus in den biaxialen Antriebsmodus geschaltet ist, und
das Relaiselement eine Feder (663) aufweist, die in der Lage ist, sich in eine Richtung zu dehnen, in der das untere Ende des unteren Hebels (632) des Kupplungshebels (630) geschoben und gezogen wird.

3. Waschmaschine vom Trommeltyp nach Anspruch 2, wobei die Feder (663) eine Feder mit anliegenden Windungen aufweist.

## Revendications

1. Machine à laver de type à tambour comprenant :
- une cuve externe (20) disposée dans une carcasse (10) ;
- un tambour (22) disposé dans la cuve externe (20) et pouvant tourner autour d'un axe horizontal ou d'un axe d'inclinaison incliné par rapport à une direction horizontale ;
- un corps rotatif (24) disposé au niveau d'une partie arrière du tambour (22) et une surface du corps rotatif (24) étant prévue avec une partie en saillie (24a) pour être en contact avec le linge ; et
- une partie d'entraînement (30) pour faire tourner le tambour (22) et le corps rotatif (24),
dans laquelle :
la partie d'entraînement (30) comprend un moteur d'entraînement (100) pour entraîner le tambour (22) et le corps rotatif (24), un arbre de pale (200), un arbre de tambour (300), un mécanisme d'engrenage planétaire (400), une unité de palier (500) et un mécanisme d'embrayage (600), dans laquelle une partie de palier cylindrique (510) est prévue dans une partie centrale de l'unité de palier (500), une partie de bride de fixation (520) est formée autour de la partie de palier (510), une crémaillère (514) est formée au niveau d'une extrémité arrière de la partie de palier (510) de l'unité de palier (500) ;
le mécanisme d'embrayage (600) comprend :
- un corps d'embrayage (610), dans lequel une crémaillère annulaire (611) formée sur une surface périphérique externe d'une extrémité avant du corps d'embrayage (610), la crémaillère (611) est formée pour être mise en prise avec la crémaillère (514) de l'unité de palier (500), dans laquelle une partie de bride de type à serrage annulaire (613) est formée au niveau d'une extrémité arrière du corps d'embrayage (610) ;
- un levier d'embrayage (630), dans laquelle le levier d'embrayage (630) comprend un levier supérieur (631) configuré le long d'une surface périphérique externe d'une demi-partie inférieure du corps d'embrayage (610) et un levier inférieur (632) s'étendant vers le bas et vers l'avant à partir de la partie la plus basse du levier supérieur (631), une partie de poussée (633) pour pousser le corps d'embrayage (610) est formée au niveau d'une extrémité supérieure du levier supérieur (631), un arbre rotatif (634) est fixé au niveau d'une extrémité supérieure du levier inférieur (632), une extrémité droite et une extrémité gauche de l'arbre rotatif (634) passent à travers le levier d'embrayage (630), un arbre de montage (635) parallèle à l'arbre rotatif (634) est formé au niveau d'une extrémité inférieure du levier inférieur (632) et le levier d'embrayage (630) est configuré pour tourner autour de l'arbre rotatif (634) en tant que centre de rotation ;
- une partie de support de levier (640), dans laquelle la partie de support de levier (640) est fixée sur une partie arrière d'une partie de palier (510) de l'unité de palier (500) ;
- un appareil d'entraînement d'embrayage (650) disposé sous le levier d'embrayage (630), dans laquelle l'appareil d'entraînement d'embrayage (650) comprend un moteur couple (651), une came (652) qui tourne autour d'un axe horizontal au moyen d'un couple du moteur couple (651) et un arbre à cames (653) qui est capable de se déplacer avec une rotation de la came (652), dans laquelle l'arbre à cames (653) est parallèle à l'arbre de montage (635), et l'appareil d'entraînement d'embrayage (650) est fixé sur une partie de bride de fixation (520) de l'unité de palier (500) via une plaque de montage (670), et la plaque de montage (670) est fixée à la partie de bride (520) de l'unité de palier (500) ; et
- une tige d'accouplement (660) positionnée entre le levier d'embrayage (630) et l'appareil d'entraînement d'embrayage (650), avec une extrémité supérieure (661) qui est montée, en rotation, sur l'arbre de montage (635) et une extrémité inférieure (662) qui est montée, en rotation, sur l'arbre à cames (653) et configurée pour pousser et tirer l'extrémité inférieure du levier inférieur (632) du levier d'embrayage (630) conjointement avec le mouvement de l'arbre à cames (653) ;
lorsqu'un mode d'entraînement passe d'un mode d'entraînement uniaxial à un mode d'entraînement biaxial, la came (652) tourne au moyen d'un moteur couple (651) afin d'amener l'arbre à cames (653) à être dans la position la plus basse, et la crémaillère (611) du corps d'embrayage (610) est fermement mise en prise avec la crémaillère (514) de l'unité de palier (500) ;
lorsque le mode d'entraînement passe du mode d'entraînement biaxial au mode d'entraînement uniaxial, la came (652) est entraînée en rotation au moyen du moteur couple (651) afin d'amener l'arbre à cames (653) à être dans la position la plus haute, la partie de bride de type à serrage (613) est mise en prise avec une partie concave serrée (114) d'un rotor (110) du moteur d'entraînement (100).

2. Machine à laver de type à tambour selon la revendication 1, dans laquelle :
- le levier d'embrayage (630) maintient un état dans lequel la partie de poussée (633) du levier supérieur (631) est en contact avec le corps d'embrayage (610) et pousse la partie de bride (612) du corps d'embrayage (610) vers l'avant lorsque le mode d'entraînement passe dans le mode d'entraînement biaxial ; et
- l'élément d'accouplement comprend un ressort (663) pouvant s'allonger dans une direction dans laquelle l'extrémité inférieure du levier inférieur (632) du levier d'embrayage (630) est poussée et tirée.

3. Machine à laver de type à tambour selon la revendication 2, dans laquelle le ressort (663) comprend un ressort enroulé de manière serrée.
